# EUROPEAN PATENT APPLICATION

(11) **EP 4 491 290 A2**
(43) Date of publication of application: **15.01.2025**
(21) Application number: 24215165.2
(22) Date of filing: 20.09.2019
(51) Int. Cl.: B08B 1/00

(54) **TECHNIQUES TO IMPROVE MHD JETTING PERFORMANCE**

(30) Priority: 20.09.2018 US 201862733980 P; 20.09.2018 US 201862734025 P; 20.09.2018 US 201862734015 P; 25.03.2019 US 201962823171 P; 26.03.2019 US 201962823748 P; 26.03.2019 US 201962823757 P; 08.04.2019 US 201962830744 P
(62) Divisional of application: 19863811.6
(71) Applicant: Desktop Metal, Inc., Burlington, MA 01803 (US)
(72) Inventor: GIBSON, Mark Gardner, Burlington, MA 01803 (US); SACHS, Emanuel Michael, Burlington, MA 01803 (US); BELL, Julian, Burlington, MA 01803 (US)
(74) Representative: Manitz Finsterwald Patent- und Rechtsanwaltspartnerschaft mbB

(57) **Abstract**

An improved additive manufacturing system for manufacturing metal parts by magnetohy-drodynamic printing liquid metal. A monitoring system including at least one camera capturing light reflected from a strobe light source. Images of the droplets are captured during their jetting and analyzed to determine whether the jetting performance is meeting specifications. A nozzle of the system has a nozzle bottom and a nozzle stem extending outward therefrom on which a meniscus of liquid metal can form. The nozzle is cleaned by bringing a ceramic rod in the vicinity of the nozzle and jetting a bead of metal which is rotated against the nozzle to remove an amount of dross.

## Description

### FIELD OF THE DISCLOSURE

The subject matter of the present disclosure generally relates to the fabrication of metal parts by additive manufacturing using magnetohydrodynamic (MHD) printing of molten metal, and more particularly relates to monitoring and improving print performance.

### BACKGROUND OF THE DISCLOSURE

Metal parts may be additively manufactured using MHD printing of molten metal. Such additive manufacturing is described in U.S. Patent No. 10,201,854 entitled "Magnetohydrodynamic Deposition of Metal In Manufacturing" and filed March 6, 2017, the entire contents of which are incorporated by reference herein in their entirety.

MHD printing in the context of the present disclosure is generally characterized by the use of controlled magnetohydrodynamic pulsing to selectively jet successive layers of liquid metal. A fluid chamber contains liquid metal and a magnetohydrodynamic force is created in the liquid metal, causing a drop or stream of liquid metal to be expelled from a discharge orifice of a nozzle. This may be accomplished in a continuous stream, segments of continuous stream or a series of droplets. The nozzle is moved relative to a build plate on which the successive layers are deposited, thereby forming a three-dimensional shape.

There are a number of challenges associated with MHD printing and resultant print quality depends on a number of factors. It is desirable to achieve precision in the size and shape of droplets as well as their velocity and angle relative to the axis at which they are intended to be expelled from the discharge orifice. Control and maintenance of a meniscus of liquid metal at the discharge orifice is also important. Failure to achieve these traits can lead to poor print qualities and mechanical properties.

Accurate placement of the drops onto the substrate is important to produce an accurate result. If the droplets are jetted from a nozzle, there are several conditions which may cause the droplets to land in other than an intended location. These include a change in the angle or velocity of the droplet(s) exiting the nozzle, change in the size of droplets, production of "satellites" (unwanted additional drops generated during jetting), or clogging or other stopping of the jetting altogether. Any of these can produce an unwanted reduction in the quality of the printed output.

In order to maintain consistent jetting performance, it is useful to control the interaction between the liquid metal being printed and the surfaces of the jetting apparatus (here referred to as the nozzle) that contain and are in contact with the liquid metal.

One particularly critical interaction is at the location where the jetted metal leaves the nozzle exit. In cases where the molten metal is able to wet to the nozzle, a meniscus of molten metal may develop at the nozzle exit. The geometric characteristics of this meniscus (such as diameter, circularity, and thickness, and in certain instances, the presence and thickness of an oxide skin on the surface of the meniscus) have been observed to affect the speed of the jetting process, the angle of the resulting jet, the size of the drops produced by the jetting process, the generation of satellites and in certain instances cause interruption of the jetting process altogether. Change in the shape of the wetted area and the meniscus can cause these jet characteristics to change, potentially producing an inconsistent jet, and negatively affecting print quality. This is particularly a concern with molten metals that wet readily to nozzle materials because as the jetting process proceeds the wetted area, and resulting meniscus, can grow to such a degree that the jetting process is impeded.

In jetting of liquid reactive metals, oxides form very quickly on any exposed metal surface. These oxides and other unwanted debris can build up on the jetting nozzle, altering its geometry. For example, the nozzle orifice may be partially or fully obscured with debris. In addition, depending on the nozzle material, the normal wetting of the liquid metal onto the nozzle surfaces may change over time. The combination of debris and changes in wetting can cause unwanted changes in droplet size, trajectory, and other parameters. In extreme cases, the nozzle may stop jetting altogether.

Maintenance of conditions at the nozzle is therefore important. However, because of the high temperature and reactivity of the liquid metal, many ordinary nozzle cleaning methods such as those used commonly used in inkjet printers are ineffective or impractical. For example, a rubber wiper would melt or burn immediately on contact with the molten metal, and a brush made of common metals such as brass or stainless steel would be quickly dissolved by the aluminum. Therefore, cleaning methods are needed which remove unwanted material from the nozzle without disturbing the wetting of the nozzle surfaces and without the cleaning apparatus being damaged by the high temperatures or reactivity of the liquid metal.

The subject matter of the present disclosure is directed to overcoming, or at least reducing the effects of, one or more of the problems set forth above.

### BRIEF SUMMARY OF THE DISCLOSURE

Described are improvements for additive manufacturing systems using MHD printing of liquid metal, and methods of operating the same, to achieve advantageous jetting characteristics with consistency.

In certain embodiments, an observation system is employed to monitor or record the characteristics of droplets expelled during MHD jetting, either during a print or during a testing period. Analysis of the characteristics may inform adjustments to printing parameters or cleaning to maintain desired printing qualities. In certain embodiments, the geometry and construction of the nozzle are controlled to achieve favorable meniscus shaping. Finally, in certain embodiments the printer includes a cleaning apparatus for maintaining the meniscus conditions at the discharge orifice of the nozzle.

### BRIEF DESCRIPTION OF THE DRAWINGS

The foregoing summary, preferred embodiments, and other aspects of the present disclosure will be best understood with reference to a detailed description of specific embodiments, which follows, when read in conjunction with the accompanying drawings, in which:
Fig. 1 is a block diagram of an additive manufacturing system for MHD printing molten metal.
Figs. 2A-C are depictions of the nozzle of the system of Fig. 1.
Figs 3A-D depict the formation and ejection of a droplet during MHD printing.
Fig. 4 is a side view of a first monitoring system of an additive manufacturing system.
Fig. 5 is a top view of a second monitoring system of an additive manufacturing system.
Fig. 6 is a flow chart of an embodiment monitoring system in operation.
Fig. 7 is a depiction of an image as captured by a camera in a monitoring system and the determined parameters of the droplet therefrom.
Fig. 8 depicts undesired characteristics during jetting of liquid metal.
Figs. 9A-D depicts a nozzle for MHD printing of liquid metal.
Figs. 10A-B depicts wetting conditions on a nozzle.
Figs. 11A-C depict nozzle geometries with a non-wetting shield.
Fig. 12 depicts a stem face with a first tier and a second tier.
Figs. 13A-D depicts geometries of a stem face for a nozzle.
Figs. 14A-C depicts configurations for a stem face for a nozzle.
Figs. 15A-D depict cleaning instruments for removal of dross from a MHD nozzle.
Fig. 16 is a flowchart of an embodiment method for cleaning a MHD nozzle.
Figs. 17A-B depict the method of Fig. 16.
Figs. 18 depicts an embodiment toolpath for a cleaning apparatus.
Figs. 19A-C depict a method of wetting a de-wetted nozzle.

Like reference numbers and designations in the various drawings indicate like elements.

### DETAILED DESCRIPTION

Described are methods and structures for improved MHD printing performance.

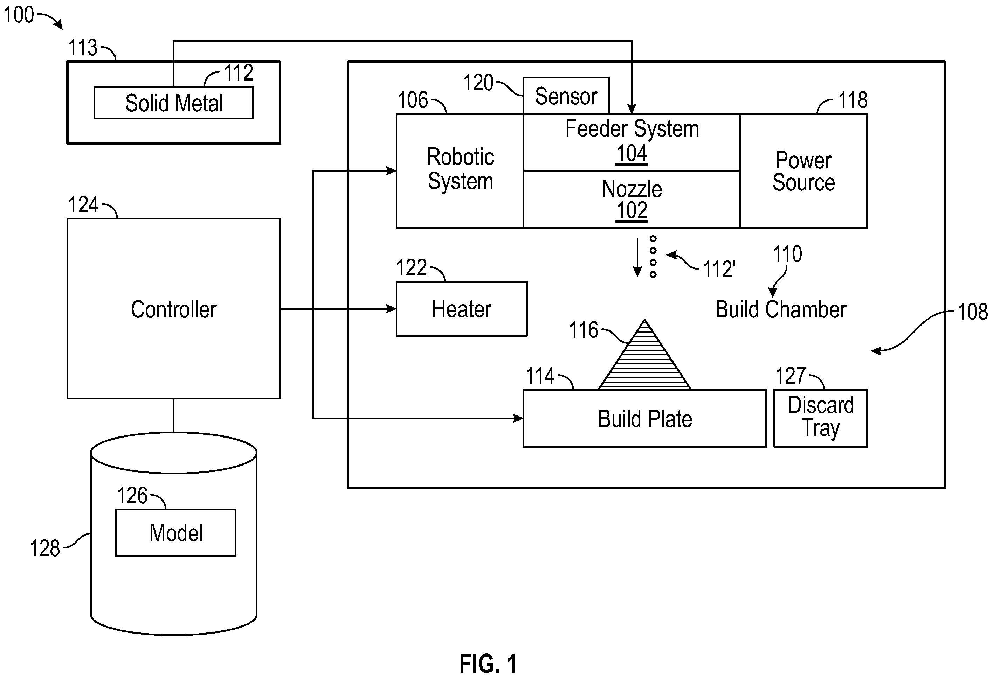

Figure 1 is a schematic depiction of an additive manufacturing system 100 using MHD printing of liquid metal 100 in which the disclosed improvements may be employed. Additive manufacturing system 100 can include a nozzle 102, a feeder system 104, and a robotic system 106. In general, the robotic system 106 can move the nozzle 102 along a controlled pattern within a working volume 108 of a build chamber 110 as the feeder system 104 moves a solid metal 112 from a metal supply 113 and into the nozzle 102. As described in greater detail below, the solid metal 112 can be melted via heater 122 in or adjacent to the nozzle 102 to form a liquid metal 112' and, through a combination of a magnetic field and an electric current acting on the liquid metal 112' in the nozzle 102, MHD forces can eject the liquid metal 112' from the nozzle 102 in a direction toward a build plate 114 disposed within the build chamber 110. Through repeated ejection of the liquid metal 112' as the nozzle 102 moves along the controlled pattern, an object 116 (e.g., a two-dimensional object or a three-dimensional object) can be formed. The object may be formed based on a model 126 enacted through a controller 124. In certain embodiments, the object 116 can be moved under the nozzle 102 (e.g., as the nozzle 102 remains stationary). For example, in instances in which the controlled pattern is a three-dimensional pattern, the liquid metal 112' can be ejected from the nozzle 102 in successive layers to form the object 116 through additive manufacturing. Thus, in general, the feeder system 104 can continuously, or substantially continuously, provide build material to the nozzle 102 as the nozzle 102 ejects the liquid metal 112', which can facilitate the use of the three-dimensional printer 100 in a variety of manufacturing applications, including high volume manufacturing of metal parts. As also described in greater detail below, MHD forces can be controlled in the nozzle 102 to provide drop-on-demand delivery of the liquid metal 112' at rates ranging from about one liquid metal drop per hour to thousands of liquid metal drops per second and, in certain instances, to deliver a substantially continuous stream of the liquid metal 112'. A sensor or sensors 120 may monitor the printing process as discussed further below.

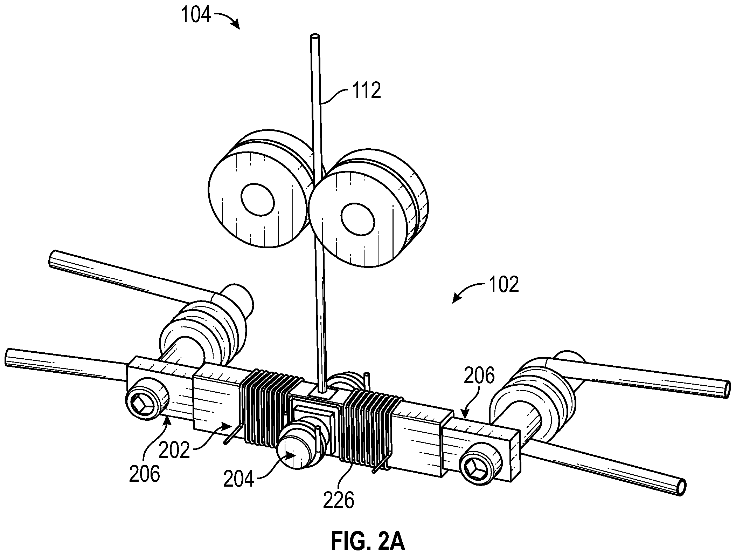

Now with reference to Figures 2A-D which depict the nozzle of the printer of Figure 1. The nozzle can include a housing 202, one or more magnets 204, and electrodes 206. The housing 202 can define at least a portion of a fluid chamber 208 having an inlet region 210 and a discharge region 212. The one or more magnets 204 can be supported on the housing 202 or otherwise in a fixed position relative to the housing 202 with a magnetic field "M" generated by the one or more magnets 204 directed through the housing 202. In particular, the magnetic field can be directed through the housing 202 in a direction intersecting the liquid metal 112' as the liquid metal 112' moves from the inlet region 210 to the discharge region 212. Also, or instead, the electrodes 206 can be supported on the housing 202 to define at least a portion of a firing chamber 216 within the fluid chamber 208, between the inlet region 210 and the discharge region 212. In use, the feeder system 104 can engage the solid metal 112 and, additionally or alternatively, can direct the solid metal 112 into the inlet region 210 of the fluid chamber 208 as the liquid metal 112' is ejected through the discharge orifice 218 through MHD forces generated using the one or more magnets 204 and the electrodes 206. A heater 226 may be employed to heat the housing 202 and the fluid chamber 208 to melt the solid metal 112. A discard tray 127 is located in proximity to the build plate and the nozzle may deposit droplets in it during a testing or calibration step.

In certain implementations, an electric power source 118 can be in electrical communication with the electrodes 206 and can be controlled to produce an electric current "I" flowing between the electrodes 206. In particular, the electric current "I" can intersect the magnetic field "M" in the liquid metal 112' in the firing chamber 216. It should be understood that the result of this intersection is an MHD force (also known as a Lorentz force) on the liquid metal 112' at the intersection of the magnetic field "M" and the electric current "I". Because the direction of the MHD force obeys the right-hand rule, the one or more magnets 204 and the electrodes 206 can be oriented relative to one another to exert the MHD force on the liquid metal 112' in a predictable direction, such as a direction that can move the liquid metal 112' toward the discharge region 212. The MHD force on the liquid metal 112' is of the type known as a body force, as it acts in a distributed manner on the liquid metal 112' wherever both the electric current "I" is flowing and the magnetic field "M" is present. The aggregation of this body force creates a pressure which can lead to ejection of the liquid metal 112'. It should be appreciated that orienting the magnetic field "M" and the electric current substantially perpendicular to one another and substantially perpendicular to a direction of travel of the liquid metal 112' from the inlet region 210 to the discharge region 212 can result in the most efficient use of the electric current "I" to eject the liquid metal 112' through the use of MHD force.

In use, the electrical power source 118 can be controlled to pulse the electric current "I" flowing between the electrodes 206. The pulsation can produce a corresponding pulsation in the MHD force applied to the liquid metal 112' in the firing chamber 216. If the impulse of the pulsation is sufficient, the pulsation of the MHD force on the liquid metal 112' in the firing chamber 208 can eject a corresponding droplet from the discharge region 212.

In certain implementations, the pulsed electric current "I" can be driven in a manner to control the shape of a droplet of the liquid metal 112' exiting the nozzle 102. In particular, because the electric current "I" interacts with the magnetic field "M" according to the right-hand rule, a change in direction (polarity) of the electric current "I" across the firing chamber 216 can change the direction of the MHD force on the liquid metal 112' along an axis extending between the inlet region 210 and the discharge region 212. Thus, for example, by reversing the polarity of the electric current "I" relative to the polarity associated with ejection of the liquid metal 112', the electric current "I" can exert a pullback force on the liquid metal 112' in the fluid chamber 208.

Each pulse can be shaped with a pre-charge that applies a small, pullback force (opposite the direction of ejection of the liquid metal 112' from the discharge region 212) before creating an ejection drive signal to propel one or more droplets of the liquid metal 112' from the nozzle 102. In response to this pre-charge, the liquid metal 112' can be drawn up slightly with respect to the discharge region 212. Drawing the liquid metal 112' slightly up toward the discharge orifice in this way can provide numerous advantageous, including providing a path in which a bolus of the liquid metal 112' can accelerate for cleaner separation from the discharge orifice as the bolus of the liquid metal is expelled from the discharge orifice, resulting in a droplet with a more well-behaved (e.g., stable) shape during travel. Similarly, the retracting motion can effectively spring load a forward surface of the liquid metal 112' by drawing against surface tension of the liquid metal 112' along the discharge region 212. As the liquid metal 112' is then subjected to an MHD force to eject the liquid metal 112', the forces of surface tension can help to accelerate the liquid metal 112' toward ejection from the discharge region 212.

Further, or instead, each pulse can be shaped to have a small pullback force following the end of the pulse. In such instances, because the pullback force is opposite a direction of travel of the liquid metal 112' being ejected from the discharge region 212, the small pullback force following the end of the pulse can facilitate clean separation of the liquid metal 112' along the discharge region 212 from an exiting droplet of the liquid metal 112'. Thus, in some implementations, the drive signal produced by the electrical power source 118 can include a wavelet with a pullback signal to pre-charge the liquid metal 112', an ejection signal to expel a droplet of the liquid metal, and a pullback signal to separate an exiting droplet of the liquid metal 112' from the liquid metal 112' along the discharge region 212. Additionally, or alternatively, the drive signal produced by the electrical power source 118 can include one or more dwells between portions of each pulse.

As used herein, the term "liquid metal" shall be understood to include metals and metal alloys in liquid form and, additionally or alternatively, includes any fluid containing metals and metal alloys in liquid form, unless otherwise specified or made clear by the context. Metals suitable for use with the disclosure include aluminum and aluminum alloys, copper and copper alloys, silver and silver alloys, gold and gold alloys, platinum and platinum alloys, iron and iron alloys, and nickel and nickel alloys.

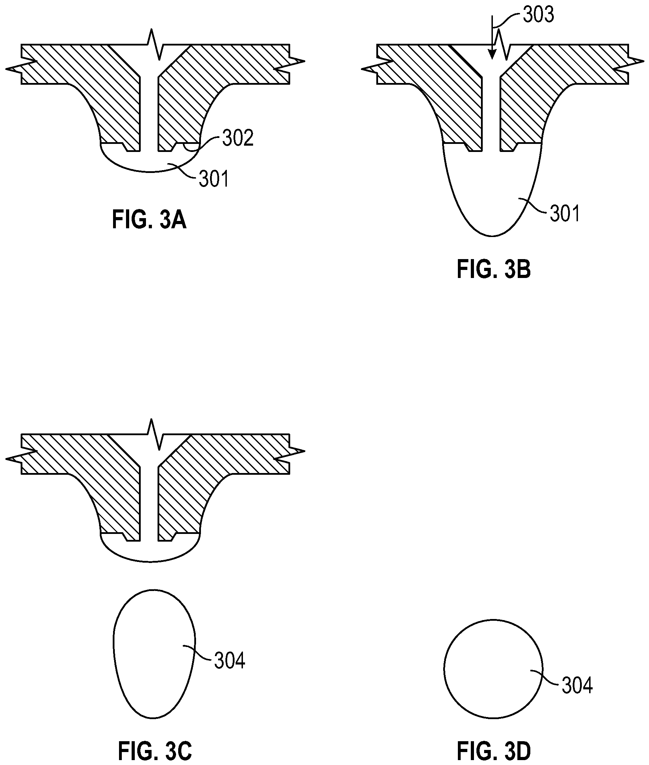

Figures 3A-3D depict the formation of a droplet during the MHD printing process. In Figure 3A, a meniscus 301 can be seen wetted to a nozzle stem face 302. In Figure 3B, an MHD force 303 acts to increase the size of the meniscus 301 to form a droplet. In Figure 3C, the droplet 304 can be seen having separated from the meniscus. Finally in Figure 3D the droplet 304 can be seen in flight towards a build plate or object being manufactured.

In certain embodiments, the characteristics of the rapidly moving droplets and/or stream are monitored. These characteristics may be compared against acceptable specifications, and operating parameters of the printer may be adjusted to keep the characteristics within specifications and/or compensate for those which are out of specification.

The measurement, evaluation and adjustment process may be performed during a period of interruption in the printing process, such as during a cleaning and evaluation cycle. The nozzle and substrate may be temporarily positioned such that droplets do not land on the substrate but are instead directed to a waste area such as a discard tray. This setup has the advantage that jetting for building an object can be accomplished very close to the object (where optical observation of the droplets would be difficult), while jetting for evaluation can be made with larger distances. Alternatively, the measuring, evaluation and adjustment process may be performed continuously while printing is taking place.

To characterize the stream of droplets, a strobed light source ("strobe light") made using a pulsed LED or using other means known in the art is directed at the stream at an angle perpendicular (or nearly so) to the droplet trajectory. A camera having a sensor size and lens parameters, and user-controllable exposure start time and duration, is also directed at the stream at an angle perpendicular to the droplet trajectory.

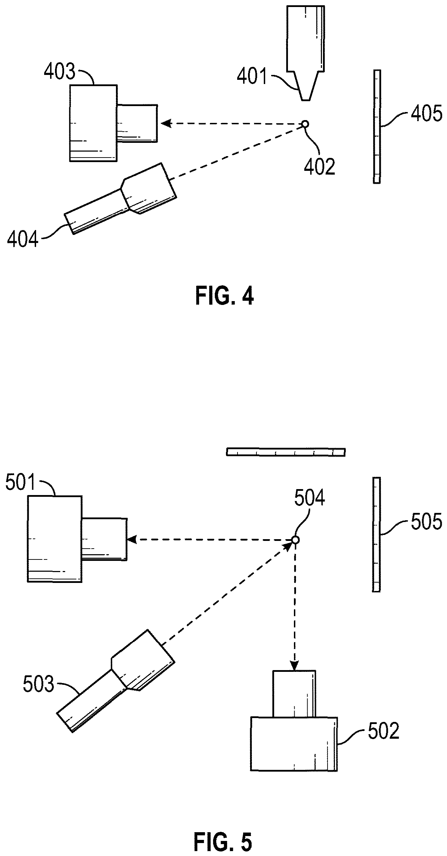

Figure 4 depicts a side view of a first schematic setup for monitoring droplets ejected during a maintenance period or during MHD printing. A nozzle 401 ejects a droplet 402. A camera 403 captures light from strobed light source 404 that is reflected off the droplet 402. An optional non-reflective surface 405 is positioned such that the droplet falls between the camera and the non-reflective surface 405.

Figure 5 depicts a top view of a second schematic setup for MHD monitoring. A first camera 501 and a second camera 502 are set with their fields of view at right angles to one another. These cameras each capture light from strobed light source 503 that is reflected off the droplet 504. Optional non-reflective surfaces 505 are positioned such that the droplet 504 falls between the cameras and the non-reflective surfaces 505.

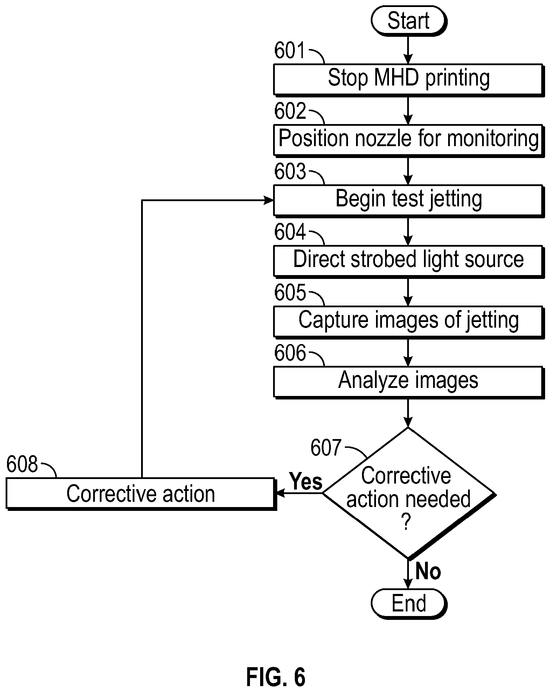

Figure 6 depicts a flow chart of an embodiment monitoring method. In step 601, an ongoing MHD printing process is suspended. In step 602 the nozzle is positioned over a discard tray and in a position where a stream of droplets can be observed by the monitoring system. In step 603, droplets of liquid metal are jetted into the discard tray. In step 604, while jetting is ongoing, the light source is strobed and light is reflected off of the droplets. In step 605 images are captured by the camera or cameras of the monitoring system. In step 606, those images are analyzed to determine the parameters of the jetting. Those parameters can be compared in step 607 to desired parameters. If corrective action is not needed, the process is ended. If corrective action is needed, that may then be performed in step 608. This may include cleaning the nozzle as detailed below. The printing parameters may also be adjusted, for instance the current or magnetic field strength and/or frequency may be adjusted. In the embodiment, the process is returned to step 603 and another test print is performed. This process may be repeated until the printer is operating within acceptable parameters and then returned to service. The printer may also be withdrawn from service and the print canceled if the desired parameters are exceeded by a sufficient degree or corrective action repeatedly fails to return the printing parameters to acceptable conditions.

The shutter duration of the camera, the duration, frequency, and number of the strobe light flashes, as well as the timing of both shutter and strobe flashes relative to the time a droplet is ejected, are manipulated such that an individual droplet is illuminated several times while in the camera's field of view and while the camera is acquiring an image.

Because the liquid metal drops are substantially spherical and highly reflective, only a small number of the light rays reflected from the drop will enter the camera lens, but the intensity of these rays will be high compared to a less reflective material. As a result, a relatively bright, sharp point will appear in the camera image, tending to show the geometric center of the single drop at the time each strobe flash occurred. This makes subsequent analysis of the drop position easier.

In certain embodiments, the region of the stream viewed by the camera is that region between the nozzle and the substrate during printing, and the strobe flashes occur quickly enough that the drop is illuminated several times during its flight from nozzle to substrate. In this way, the stream can be continuously monitored during printing.

To obtain droplet characteristics, the image described above is analyzed to determine the size and position of the artifacts described above. In one embodiment, the artifacts are small points of white on an otherwise dark background, and a computer program such as OpenCV (Open Source Computer Vision Library) is used to find the position of these points. In another embodiment, the drop stream is backlighted by the strobe using a diffuser, and the resulting image shows dark silhouettes of the drops at each strobe flash against a light background, reflecting the drop's size, shape, and position at each time the strobe fired.

For a given optical system and frequency of strobe flashes, the distance between the artifacts in the image is proportional to the drop speed, and the absolute speed of a drop may be calculated with useful accuracy given proper calibration of the camera, lens, and strobe frequency. In one embodiment, the camera and lens combination is set to a fixed focus, and a precision distance scale is erected at the distance yielding the clearest image. An image of the scale is captured, and a conversion between camera pixels and distance thereby obtained. During jetting, the distance between drops can be accurately measured so long as the drops fall in the same plane previously occupied by the scale.

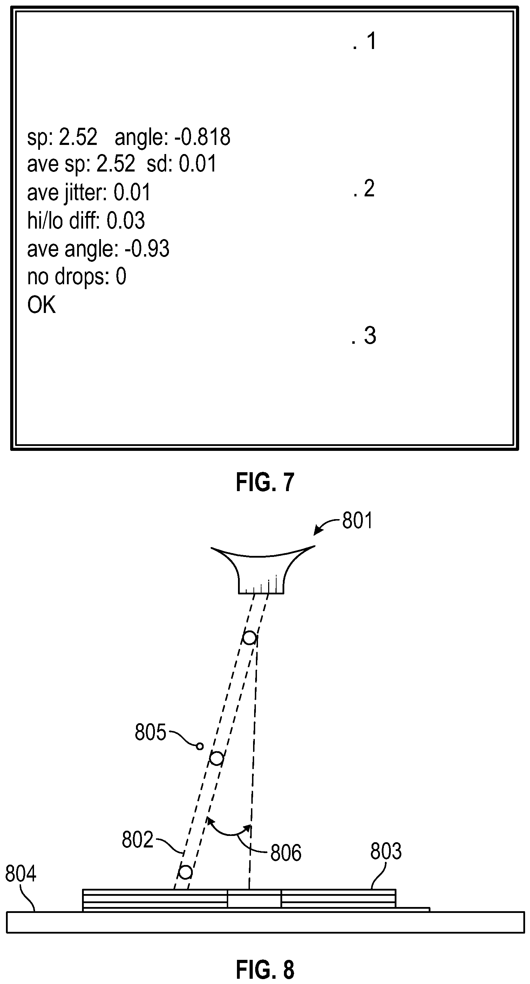

Figure 7 depicts a camera image showing several drop reflection artifacts of the same drop. In this image, the distance between artifacts (compensating for optics) was 0.63 mm, and the strobe frequency was 4000 Hz or 0.00025s between flashes. Dividing the distance by the time yields a drop velocity of 2.52 m/s. The image is overlaid with numbers next to each artifact recognized by the computer-vision software, as well as statistics in the following order: speed of the current drop, angle of the current drop, and the following statistics for the prior 25 drops: exponentially-weighted moving average speed, standard deviation of speed, average change in drop-to-drop speed, difference between highest and lowest speed, average angle. The last statistic is the number of consecutive frames with no drops found (indicating possible nozzle failure), in this case zero. `OK' indicates that the recognition of drop artifacts passes several internal checks.

Fig. 8 depicts undesirable characteristics during MHD printing. Nozzle 801 deposits droplets 802 to form an object 803 on a build plate 804. An artifact 805 can be seen in proximity to a droplet. It can be seen that the jetting path of the droplets is off of the intended ejection path by an angle 806.

Now described is an embodiment setup. A camera provides 752 pixels in the longer dimension of its frame, each pixel measuring 6 um in size, for an image length of 4.51 mm. The desired field of view is chosen to be 3 mm, which is the standoff distance between the nozzle outlet and substrate during printing. The ratio of these quantities is the desired magnification of 1.5x. Assuming ideal lens parameters, the maximum discretization error due to pixel size is 3 um at the image or approximately 2 um at the droplets. A lens of 25 mm focal length is chosen, and standard lens equations are used to calculate the working distance: 41.67 mm.

Continuing the example, the nominal drop size is 250 um, so 12 droplets would fit end-to-end in a 3 mm field of view. However, to make the system's task of resolving the droplets easier, the strobe frequency is divided by two so that a one-diameter gap is left between each droplet artifact in the image. (Note that due to the effect described above, the reflected light artifact may be smaller than the actual droplet, so the gap may not be needed depending on lens quality.) With a maximum droplet speed of 2 m/s, and a desired pitch of 500um, the strobe flashes should occur at 4000 Hz to provide the desired spacing.

Depending on drop speed and field of view, at a sufficiently low jetting frequency the distance between subsequent jetted drops will be larger than the camera field of view. In this case, only one drop will ever be visible in the camera frame at one time, and any number of artifacts in the image can be safely assumed to be images of the same drop illuminated by different strobe flashes. However, as jetting frequency increases sufficiently, multiple drops will exist in the field of view at any time. In another embodiment, the strobe frequency is manipulated such that the artifacts appear in "groups", each group consisting of artifacts from a specific drop. For example, with a jetting frequency of 500 Hz and a speed of 1 m/s, the distance between drop centers will be 2mm. With a 3 mm field of view, either one or two drops will be visible in the camera at any time. By choosing a strobe frequency of 2000Hz, the distance between artifacts will be .5mm. By choosing to use three strobe flashes, the apparent gap between the last artifact of one drop and the first artifact of the next drop will be larger than the gap between artifacts of the same drop. When recognizing drop images, the computer-vision software can be programmed to recognize these gaps to distinguish between drops and calculate individual velocities.

For a given drop velocity, as jetting frequency further increases, the distance between drop centers becomes smaller and there are guaranteed to be multiple drops in the camera's field of view at any given time. In another embodiment, the drops themselves are used in lieu of multiple flashes of the strobe light. The strobe light may be flashed at an arbitrary frequency and multiple drop artifacts will always appear in the image. Assuming the jetting frequency is known, the positions of these artifacts can be used to calculate the velocity of at least some of the drops. Further, variations in the distance between drop artifacts can be used to determine variations in drop speed between subsequent drops. If the frequency chosen is the jetting frequency or a factor of it, the drops will tend to appear in the same location in every image, possibly aiding analysis.

The length of each strobe flash is also calculated. The longer the strobe flash and the faster the droplet speed, the more "smeared" each reflected artifact will appear. Depending on the software algorithm used to locate the reflections in the image, this could reduce quality. Assuming a maximum allowed blur of 5% of drop diameter, the drop at 2 m/s will move 12.5um in 6.25 us. It will be understood that shorter pulses provide less smearing effect, while longer ones provide more light for the camera's exposure. In this calculation, a burst of six strobe flashes, each 6 us in duration, occurring at 4000 Hz, will illuminate the drop six times over a 3 mm distance at top speed. The exposure time of the camera would need to be greater than 1.25 ms to capture all six flashes, but less than the time for the next droplet to arrive (which depends on jetting frequency) to avoid capturing reflections from multiple droplets.

In one embodiment, to determine the drop velocity, the camera and strobe are triggered together just after a drop is jetted, such that the drop is captured two or more times while within the camera's field of view, resulting in the multiple exposure described above. The resulting image is converted to one-bit (black and white) using a threshold determined experimentally. Due to the sharpness and contrast of the image, a wide range of thresholds will be effective. Next, a Hough Circle Transform or similar function is used to identify the X,Y location in the image of the points representing the drop. The X,Y data, in camera pixels, is then multiplied by the factor determined during calibration. At this point the data can be analyzed in a number of ways, some of which are described below.

In one embodiment, the velocity of the jetted drop is calculated as follows: The points found are sorted along the direction of jetting. Next, the distance between each point and its immediate neighbor is calculated using the Pythagorean theorem and recorded. This yields n-1 distances for n points. The mean and standard deviation (SD) of the distances is calculated, with the standard deviation giving a measure of data quality since any errant drops or other image anomalies will often produce large outliers. Assuming the SD is reasonable, the mean distance is divided by the time between strobe flashes to yield a velocity. In one embodiment, the calculated means of a plurality of captured images are themselves averaged, yielding a low-pass-filtered average drop speed. In another embodiment, the change in drop speed per unit time can indicate resonance of the nozzle or liquid metal. In yet another embodiment, movement of the drop images within the frame without a corresponding speed change can indicate a change in drop formation time after the jetting pulse, which can indicate a change in internal nozzle condition (such as air ingestion, dewetting, or cracking).

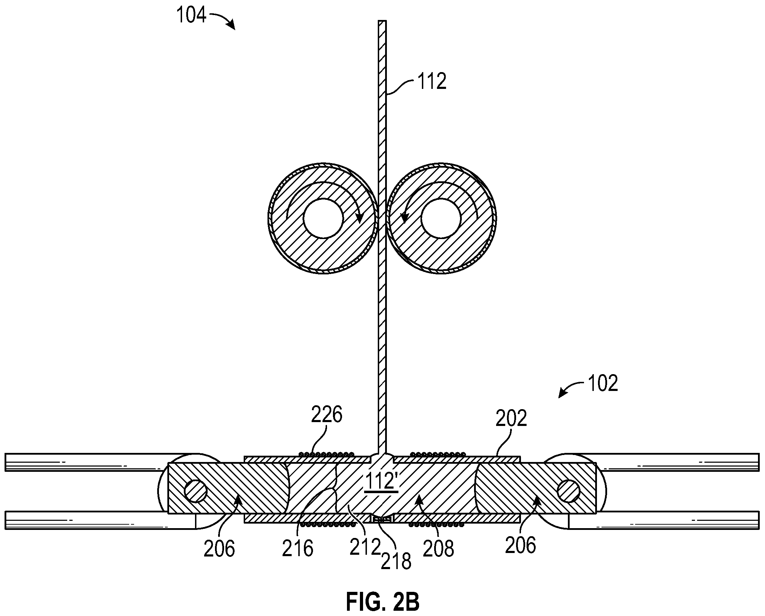

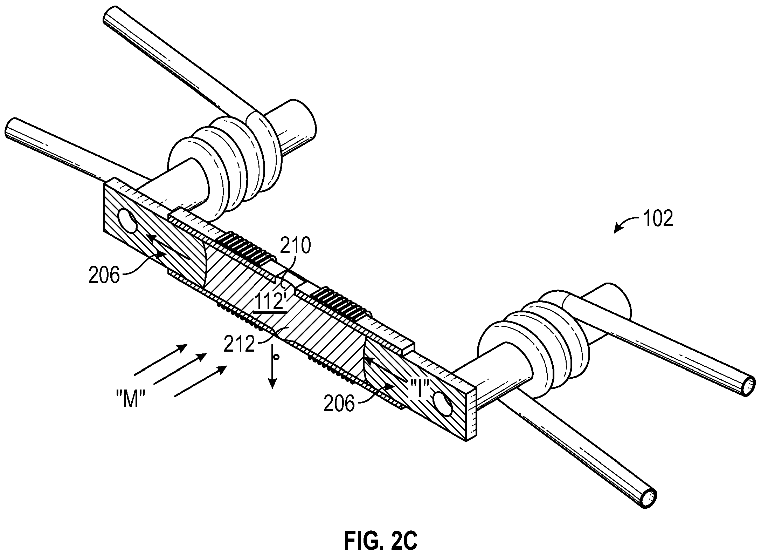

In one embodiment, a line is fitted to the X,Y points in the image using the least-squares method, and the angle of this line calculated as the arctangent of the distance traveled normal to the intended jetting direction, divided by the distance traveled along it. If the camera mounting is calibrated to a known angle (for example the surface of the substrate to be printed on), a deviation from that desired angle can be calculated, otherwise a plurality of images can be analyzed to observe changes in jetting angle over time, which can indicate an issue with the nozzle. In one embodiment, two cameras observe the stream from different directions, allowing any stream angle to be observed. In a preferred embodiment, the directions are at right angles from each other, which allows maximum accuracy of measurement, as shown in Figure 2. Note that the cameras do not need to be aligned with the axes of motion of the printer system. In one embodiment, rapid changes in the measured angle between frames can indicate oscillation or jitter which could result in incorrect droplet placement on the substrate.

Other drop and stream characteristics can likewise be inferred and/or calculated by additional analysis of the image. For example, should a drop fail to be ejected, this will be seen as an "empty" image. Depending on the frequency of this condition, the control system of a printer might initiate a nozzle cleaning, or gauge remaining nozzle life. In certain embodiments, an infrared camera may be employed, however generally images will capture an image having a blurred line representing the stream of droplets unless a very short shutter speed is employed.

In another embodiment, unwanted "satellites" or secondary drops are detected as follows. Again the drops are sorted along the direction of jetting, but in this case the angle between each drop and its immediate neighbor is calculated. Should these angles deviate from each other by more than a small amount, this indicates multiple streams are present. In another embodiment, satellites are detected by the presence of multiple drops at the same distance along the jetting direction, drops at extreme angles, or very large differences between velocities between drops. In an alternative embodiment, points are grouped by their calculated velocity, then line fits are done within the groups.

With the droplet parameters known, appropriate countermeasures can be taken if stream or drop parameters are found to be outside desired specifications. In one embodiment, the amount of motive force on the liquid (e.g. pressure) is adjusted to keep droplet speed within the desired range. In a system using MHD to eject the liquid metal, the motive power can be adjusted by increasing the current, increasing the duration of a pulse creating a drop, or a combination of these. In another embodiment, excessive deviation of the stream angle from specification triggers an automatic cleaning of the jetting nozzle. In another embodiment, a print job is aborted altogether if parameters deviate too far from specification.

In certain embodiments, the commanded position of the substrate during printing is adjusted to compensate for changes in droplet speed and trajectory, causing the drops to land closer to the desired location on the substrate than they would without such compensation.

It will be understood that modifications to illumination, camera, lens, and other photographic techniques known to the art may produce an image different than the light points of light on a dark background described, without changing the fundamental principle of image artifacts corresponding to the droplet size and/or position at known points in time. For example, in one embodiment, the drops are backlit as described above. Unlike the direct lighting described previously, the backlit illumination provides a silhouetted image of the falling drop, and thus the resulting image may reflect both the shape and size of the droplet at the moment the strobe fires. This effect could be used to estimate drop size, and to track droplet vibration during flight.

In another embodiment the strobe frequency of the strobe is varied to reduce or eliminate aliasing in the images caused by drop vibration in flight. After ejection, drops may not be perfectly spherical but may oscillate between various oblong shapes. The altered shape can change the apparent location of the reflected artifact. By choosing a strobe frequency to be a multiple of this oscillation frequency, the drop will appear in the same orientation in each artifact, yielding consistent placement.

Due to the availability of computer vision software toolkits, the analyses described can be done several times per second even on modest computer hardware. Thus at low frequencies, every drop might be captured. However, at higher frequencies, a system might only capture a portion of the drops jetted. In order to prevent overlooking certain variations (especially resonance), the jetting velocity and/or capture frequency can be varied in an attempt to change the aliasing that might occur at a single frequency.

One goal of the present disclosure is to detect deviation in stream angle from the desired one both instantaneously and over time. If this deviation is normal to the camera's viewing axis, or has a substantial component in that direction, the deviation is easily registered by the camera. However, if the deviation is toward or away from the camera, a lens with sufficient depth of field will continue to see the same angle, with slightly reduced velocity. In one embodiment, a lens with intentionally limited depth of field (for example, with no iris or the iris fully open) is used, with the blurring in different areas of the frame being used by the algorithm to detect movement toward or away from the camera. In another embodiment, a second camera and lens assembly observes the illuminated stream from a direction at right angles to the that of the first camera. If the expected angle deviations are slight, the second camera need not measure velocity. As a result, it could be equipped with a lens of lower magnification, providing a larger field of view useful for detecting secondary streams or satellites, or for scanning the part surface. Alternately, a camera of lesser specification could be employed, reducing the cost of the system. Further, its detection algorithm could be limited to angle only, reducing computational requirements.

In certain embodiments, the camera and strobe light source can be connected to prisms, mirrors, light pipes, or other optics which allow them to be mounted in a convenient location. In certain embodiments, a single strobe/camera set can observe multiple streams, and the analysis algorithm can calculate statistics for them separately.

When attempting to monitor drops during printing a 3D metal part, several problems may arise that do not occur when imaging drops alone or with a nozzle only. For example, the portion of the part already printed will appear in the frame, requiring more complex computer-vision algorithms to ignore it. Another issue is that depending on the area of the part being printed, the portion already printed may extend toward the camera by up to many inches, possibly creating a blurring of the image in this area and obscuring the drop artifacts. In certain embodiments, the cameras are aimed slightly downward so that the drops are always visible regardless of the part position. In another embodiment, a lens with very narrow depth of field (for example 0.5-2mm) is chosen, so that only the drops and immediate area are in focus. In another embodiment, the computer-vision software is programmed to ignore the portion of the image comprising the part geometry. In another embodiment, the light from the strobe is polarized to prevent unwanted low-angle reflections from the part.

A 3D printed part being printed in layers will naturally become taller as the print progresses. As this happens, the printer control will need to move the part and head away from each other. In one embodiment, the camera is at a fixed height relative to the part, and is chosen to have a wide field of view in the direction of build, so that the drops can be seen over many layers. In another embodiment, the camera is moved or tilted in concert with the movement of the head to keep the droplets in the same place in the image frame. In yet another embodiment, the head and camera are stationary, and the part is moved down to accommodate additional layers.

Maintenance of constant conditions at the nozzle exit is a particular concern in the context of MHD jetting, where a number of factors combine to increase the likelihood angle of molten metal wetting to nozzle materials, even when materials that are typically considered non-wetting, such as alumina ceramic, are used. First, MHD printing can operate at a wide range of frequencies, but typically ranging between tens of hertz and single kilohertz. This jetting produces vibration throughout the nozzle assembly, which can break up oxide skins, improve metal-substrate contact and generally promote wetting. Second, the process of forcing molten metal through a small-diameter tube - as is done when metal is forced out of the nozzle in MHD printing - can further help remove oxide from molten metal, improving the metal's wetting properties. Consequently, it is of great value in MHD printing to employ nozzle geometries and constructions that enable a consistent meniscus of molten metal to be developed and maintained.

Now described are structures for controlling the geometric characteristics of the meniscus developed at the nozzle exit during MHD printing and the maintenance of those meniscus characteristics over the duration of a print. The discharge orifice is located within a small boss, here referred to as the nozzle stem.

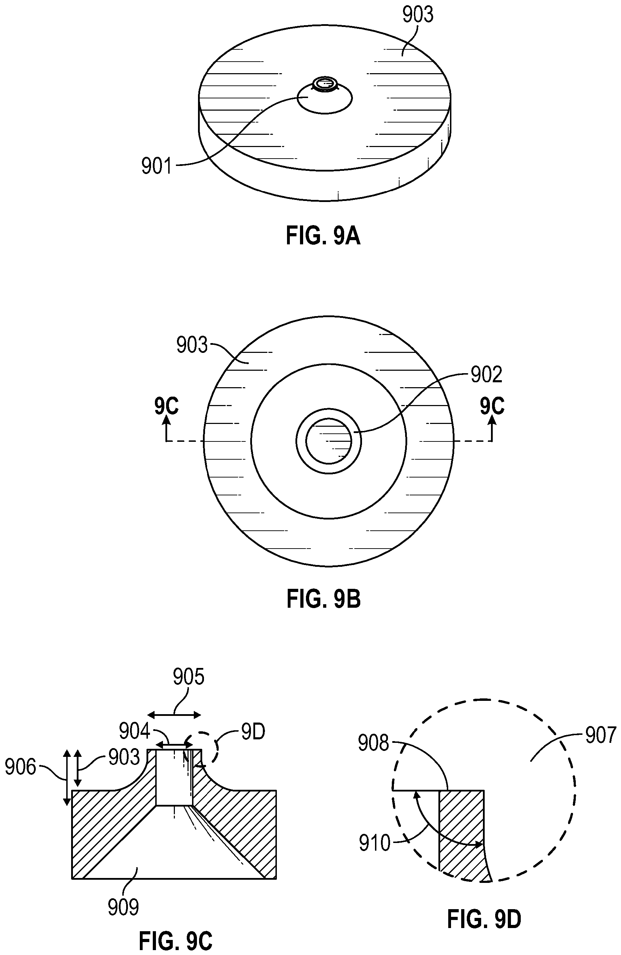

Figs. 9A-9D depict a nozzle geometry having a stem 901. It should be understand that the nozzle stem 901 is shown and described as being in an upper region of the nozzle and the body of the nozzle is described as being a bottom feature, but that in operation the nozzle stem will be positioned facing downward to jet liquid metal onto a build plate. Stem face 902 is displaced along the axis of the jet by some distance 903 away from the bottom of the nozzle body, referred to here as the nozzle bottom 902. In a preferred embodiment, this distance 903 may be between 150 µm and 350 µm, although other distances may be desirable in other preferred embodiments. By separating this face from the rest of the nozzle body, the produced meniscus of molten metal can be largely constrained by the face of this boss, providing an outer limit to the geometry that the meniscus adopts. The outer edge 907 of the boss acts to 'pin' the meniscus by providing a location where the meniscus can take a wide range of angles with respect to the face of the boss without moving appreciably. This may be understood by noting that microscopically, the edge, while appearing infinitely sharp in drawings, actually has a finite (but very small) radius. For this reason, the meniscus can assume a range of angles by moving along the surface of this small radius. Additionally, the offset 903 between the stem face and the nozzle body can provide decoupling between the meniscus on the stem face and other molten metal around the nozzle stem, for instance in the situation where the nozzle has "wetted over" (see below for description).

There are a number of ways in which the geometry of this stem can be specified or modified from the geometry shown in Fig. 9, for purposes such as specifying drop size; improving nozzle reliability, or improving manufacturability, among others.

The nozzle stem may be designed to produce a specific nozzle inner diameter 904, outer diameter 905, combination of inner and outer diameters, or fixed relationships between inner and outer diameters. It has been observed that the interaction between these two parameters defines the diameter of the drop that is produced by the jetting process. Generally, drop diameter is at a minimum when the meniscus has not developed across the face of the nozzle. As wetting progresses and the meniscus expands across the face of the stem, the drop diameter will increase. However, the effect of increasing meniscus diameter on drop sizes may not be linear, and the incremental change in effect size will decrease as the meniscus size grows.

Concentricity between the inner diameter 904 of the nozzle - the nozzle exit - and the outer diameter 905 of the nozzle stem may also be preferable to control. These diameters are identified in Figure 9C. The lateral force applied to a drop exiting the nozzle by the meniscus increases with meniscus width, and an asymmetric meniscus will apply an asymmetric force to the ejected drop, producing an angle in the drop stream. Experimentally, concentricity better than 5% of the nozzle inner diameter has been found to be adequate. In one preferred embodiment, for nozzles with a 360 µm outer diameter and a 254 µm inner diameter, concentricity better than 12 µm was found to be acceptable in the formation of droplets during jetting.

The surface quality of the stem face is important to control because surface roughness is known to affect wetting. Different combinations of jetted material and nozzle material may have different optimal surface conditions to produce specific wetting characteristics. Similarly, the quality of the inner edge 908 and outer edge 907 of the stem face 902 may be preferable to control, to ensure that flow from the nozzle throat into the meniscus is symmetric, and that the outer edge of the meniscus is symmetric when it is fully developed. The nozzle has an internal cavity 909 in which liquid metal is contained for jetting.

Controlling surface quality on the stem face through grinding or polishing, has been found to be one preferable means of ensuring acceptable inner and outer edge quality. In one preferred embodiment, a surface roughness of 0.05 µm Rₐ or better, and 0.3 µm Rₘₐₓ or better, is produced by polishing a stem face with an appropriate series of abrasives. For example, for a ceramic nozzle, diamond abrasives down to 3 µm may be used to provide this finish. During the polishing process, sufficient material is removed to eliminate all pits in the stem face, or chips in the inner and outer edges of the stem face, larger than some multiple of the surface roughness. For example, the stem face may be polished until all pits or chips larger than 3 times the Rₘₐₓ surface roughness have been removed. In this manner, a defined surface roughness and edge quality may be produced.

In certain other embodiments, the process described above may be employed, followed by subsequent polishing with a coarser abrasive to produce a rougher surface finish on the stem face while maintaining the edge quality desired. For example, the initial polishing process may be followed by a second polishing process using a 10 µm diamond abrasive. Other parameters, such as lay pattern, may also be specified using the polishing methods described above. Furthermore, the specific surface roughness achieved may be changed to provide different effects. For example, a given material may demonstrate different wetting behaviors for different surface roughness levels; or one material may provide a desired wetting behavior at one surface roughness level, while a different material provides a desired wetting behavior at a higher or lower surface roughness level.

The angle 910 between the stem face and the sides of the stem, shown in Figures 9C-D, can be varied to provide different effects. A steeper angle provides more resistance to a phenomenon called "wetting over," where the molten metal meniscus spreads beyond the boundary of the stem face and travels down over the side of the stem. This phenomenon may be caused by a variety of mechanisms, including satellite drops generated during jetting flying backwards and splattering on the nozzle bottom, where they build up and wet to the nozzle; or an asymmetric jet angle that produces asymmetric splash-back against the nozzle face, which eventually forces molten metal over the side of the stem.

A shallower angle, conversely, may be easier to manufacture, as it may result in a thicker, stronger stem, and may reduce the chance of edge chipping during manufacturing.

The height of the stem is related to, but does not entirely define, the length of the tube leading from the nozzle interior cavity to the nozzle exit (here referred to as the nozzle throat). Throat length 907 is shown in Figure 9C. The length of this throat may affect the nozzle's jetting dynamics by increasing the fluid inertance in the nozzle. While throat length can also be modified by adjusting the position of the inner cavity relative to the bottom of the nozzle, in cases where the inner cavity's position must be fixed (for instance, to ensure adequate thermal flow from external heat sources into the inner cavity), the length of the nozzle stem may be adjusted instead. In certain embodiments, this throat length is between 250 µm and 400 µm, although other lengths may be desirable in other preferred embodiments.

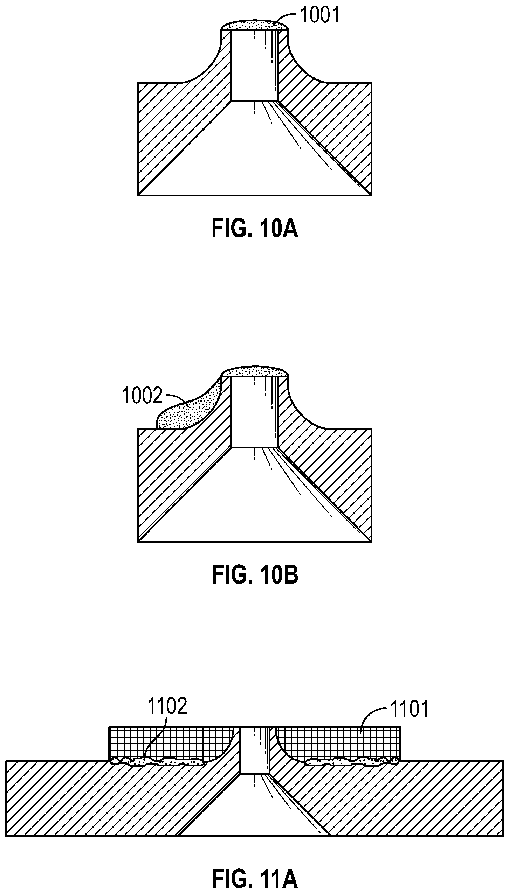

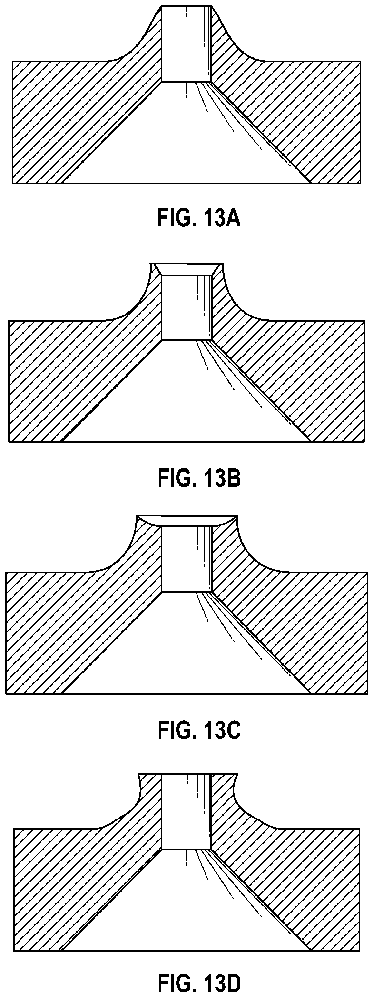

In addition to providing a distinct outer contour to constrain wetting, the axial displacement 903 between the stem face and the nozzle bottom may also help decouple the meniscus on the stem face from other molten metal in a "wetting over" event. Even if substantial molten metal builds up around the nozzle stem as shown in Figure 10A, the axial separation 903 may ensure that the outer perimeter of the stem face still defines the meniscus 1001 that acts on the droplet during a jetting event, which may help keep jetting efficiency high. This is particularly preferable in the case of stems where the angle between the stem face and sides is less than 90 degrees, for example as shown in Fig. 13D. Figure 10B depicts an over-wetted state in which the wetted region 1002 extends beyond the nozzle stem face.

Axial displacement of the stem face can be taken advantage of in different preferred embodiments. For example, one method of preventing nozzle "wetting over" while using nozzle materials that wet readily is to provide a shield of material around the stem, as shown in Figures 11A-C. A non-wetting material 1101 is bonded to the vicinity of the nozzle stem via bonding material 1102. For example, this material could be boron nitride, or Macor (a machinable ceramic manufactured by Corning, Inc. of Corning, NY); other shield materials may be preferable, depending on the nozzle material and the molten metal in use.

In certain embodiments, a paint is used to apply a conformal non-wetting shield around the stem. The paint contains some portion of a strongly non-wetting material. It also is preferably resistant to temperatures encountered at the nozzle tip. For example, a boron nitride paint such as BN-Lubricoat^{™} manufactured by ZYP Coatings (Oak Ridge, TN), may be used. The paint may be applied to the nozzle bottom, and then pushed inwards towards the stem, such that it flows up the sides of the stem but does not flow over the edge on to the stem face. This process may be performed manually, or by an automated system. In this manner, a conformal non-wetting shield may be applied to the stem through use of paint, without applying the non-wetting coating to the stem face.

In another embodiment, a conformal shield of a different material is applied around the stem. This coating may absorb molten material and wick it away, in the manner of a sponge. The coating may be applied using the process described previously, or other processes may be used, such as dipping the stem in a bath of the material, allowing it to dry and then grinding material away to reveal the stem face.

In another embodiment, a vapor deposition process is used instead of painting to apply a strongly non-wetting coating around the stem.

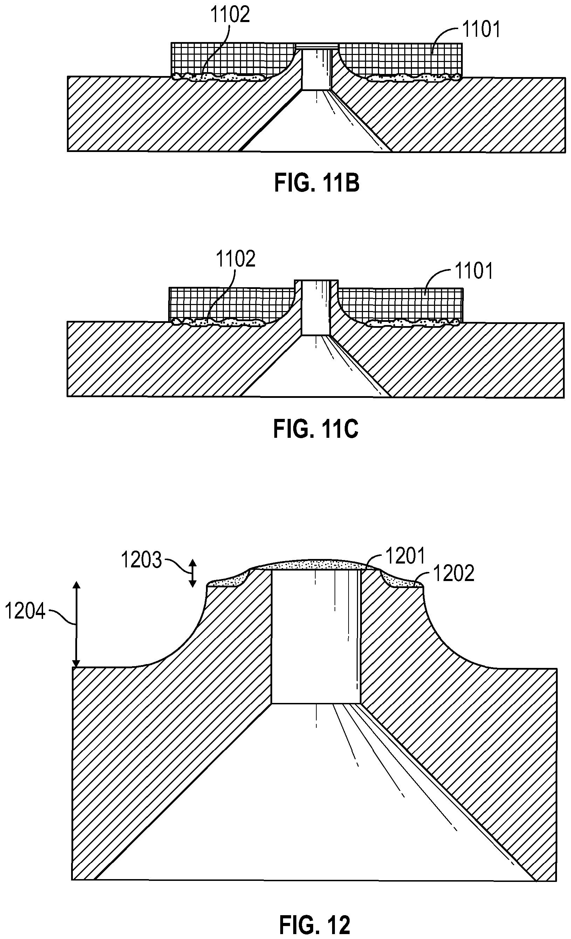

In a fourth preferred embodiment, a perforation with the shape of the nozzle stem is formed in a sheet of shield material. To facilitate manufacture, the shield material is preferably softer than the nozzle material, so that the nozzle can be used to lap a hole into the shield material. In different preferred embodiments, the shield material may be boron nitride, pyrolytic boron nitride, or Macor. The shield material is then bonded to the nozzle bottom. In one preferred embodiment, shown in Figure 3, the assembly is then finish-machined, by processes such as grinding, polishing or lapping, to ensure that the stem face and the top of the shield material are coplanar. In this manner, a smooth, continuous plane is formed by the stem face and the shield material, with minimal between them. In alternative preferred embodiments, the stem may be recessed below the level of the shield as shown in Figure 11B or allowed to protrude above the level of the shield as shown in Figure 11C. Molten metal will wet to the stem face, but may be prevented from building up around the stem and/or substantially "wetting over" the stem by the shield plate.

In other implementations, it may be found that slight "wetting over" of the nozzle may be preferable. It has been observed in some cases that "wetting over" of the nozzle may improve stream stability, by providing additional damping to the nozzle meniscus during the splash-back phase of jetting, when a drop has been released and material returns to the nozzle face. To produce this in a controlled manner, a double-stem nozzle design, shown in Figure 12, may be used. In the double-stem nozzle, a first stem 1201 with a smaller diameter is fabricated on top of a second stem 1202 with a larger diameter. The axial displacement 1203 between this smaller stem face and the larger stem face is preferably smaller than the axial displacement 1204 between the larger stem face and the nozzle bottom. The axial displacement 1203 is selected to provide the desired jet stability improvements, while minimizing coupling between the meniscus 1205 on the smaller stem face during drop formation and the meniscus on the larger face, avoiding degradation of jetting efficiency.

The nozzle is induced to "wet over" the small stem face and down to the large stem face, where a concentric, even wetted area may be developed. When this "wetting over" occurs, the outer contour of the small stem face may still be visible, as the meniscus developed on the large stem face may not completely obscure the small stem face, but instead develop over the large stem face and up to the outer contour of the small stem face. The angle of the meniscus at the outer contour of the smaller stem face may be decreased substantially. The larger axial displacement D between the large stem face and the nozzle bottom discourages further "wetting over" from the larger stem face. This nozzle may also be more readily manufacturable, thanks to the greater thickness of the stem contributed by the lower section.

Reducing the effective stem face area can improve efficiency and reduce the available area for waste byproducts from jetting (for example, aluminum oxide when jetting aluminum) to build up. Lapping processes may be employed to modify the outer contours of the nozzle stem to provide this reduction. For example, a 60-degree chamfer tool may be used to lap the nozzle stem to a razor edge, as shown in Figure 13A. The lapping process may enable extremely fine features to be produced using this method.

Alternatively, a stem may be manufactured with an internal chamfer to reduce the effective stem face area, as shown in Figure 13B.

Alternatively, a stem may be manufactured with a concave depression of a dish radius manufactured into the stem face, as shown in Figure 13C. This depression may prevent material from splashing out and wetting over the side during the "splash-back" phase of jetting. This design also increases the effective angle between the stem face and the stem sides, further preventing "wetting over".

Alternatively, a stem may be manufactured with an undercut beneath the outer edge of the stem face, as shown in Figure 13D. This increases the effective angle between the stem face and the stem sides, further preventing "wetting over".

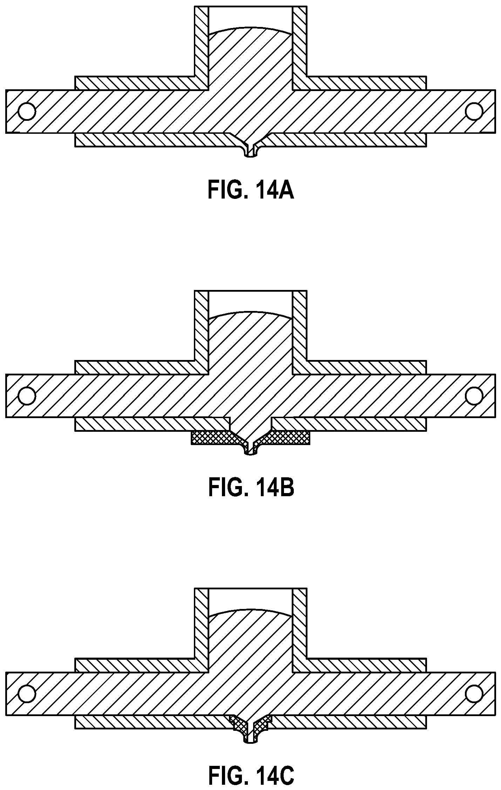

The disclosed techniques can be applied to many different types of nozzle assemblies. For example, as shown in Figure 14A, in one preferred embodiment stems are manufactured integrally with nozzles. In an alternative preferred embodiment, stems are manufactured as part of a separate element which is then attached to the nozzle. In one example, as shown in Figure 14B a stem may be manufactured in a flat shield of ceramic material, which is subsequently joined to the exterior a ceramic nozzle, using a joining process such as diffusion bonding. In a second example shown in Figure 14C, a stem may be manufactured in a tubular plug of ceramic, which is then mounted internally in a ceramic nozzle, using a joining process such as co-firing or ceramic epoxy to bond them. In a preferred embodiment where ceramic nozzle tips are used, stems on these nozzle tips may be produced by green machining, bisque machining, grinding, injection molding, laser ablation machining or other techniques. In certain instances the nozzle bottle or the entire nozzle including the nozzle body and nozzle stem may be constructed via injection molding.

Maintenance of conditions at the nozzle and of the meniscus can improve ongoing print quality. To conduct such maintenance, a nozzle may be removed during the printing process, either based on the monitoring of the print as it is underway or during scheduled intervals. This process may include positioning the nozzle in a designated cleaning area, such as over a discard tray where material may be deposited without interference with the object being printed. Nozzle maintenance may also be conducted before or after a print job is performed.

There are several techniques for removing dross, which is solid or semi-solid materials containing oxides and in some instances additional contaminants, while preserving and maintaining the desired wetting of nozzle surfaces by the liquid metal. For example, in an additive manufacturing system for A356 aluminum, dross will include primarily aluminum, silicon, and magnesium oxides.

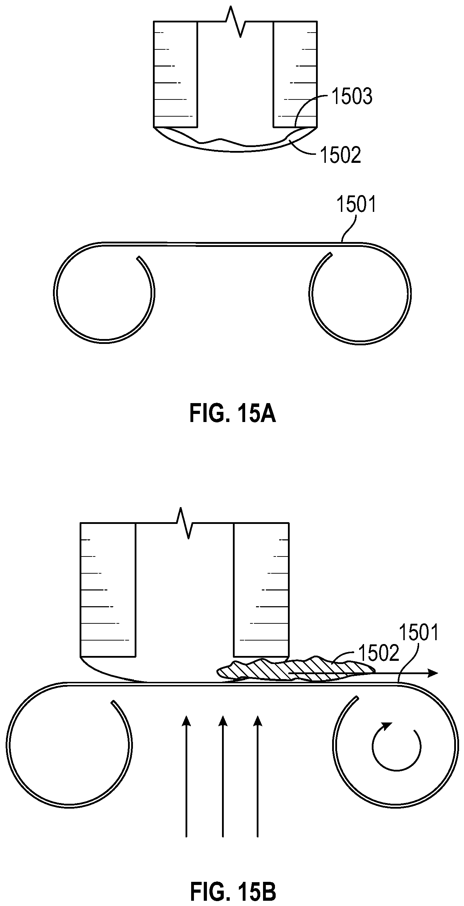

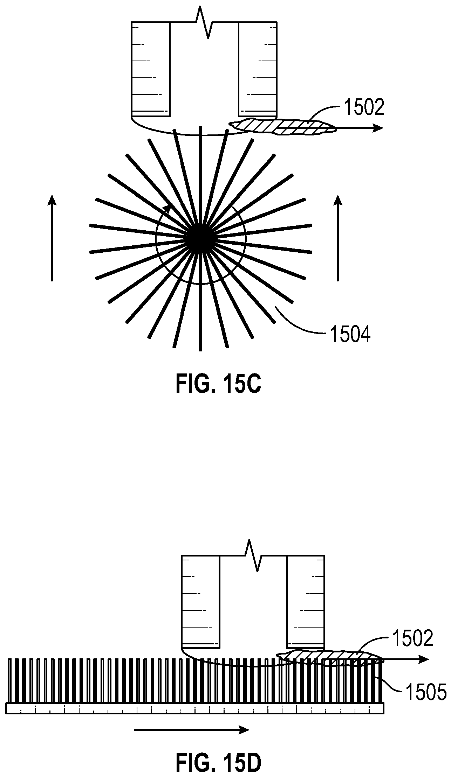

As depicted in figures 15A-B, a ceramic cloth or metal wire mesh 1501 may be employed, either in a loop or as a continuous sheet, to wipe dross 1502 away from a nozzle surface 1503. In certain embodiments, the cloth might be heated to keep the contaminants and metal molten. In other certain embodiments, this heating might be accomplished by passing electrical current though the cloth itself. In another embodiment, the cloth rides on a heated stationary "shoe" which heats the cloth and presses it against the nozzle.

As depicted in Figures 15C-D, another technique is the use of radial brushes 1504 or flat brushes 1505 to scrape dross 1502 off the nozzle surface 1503. The brushes are made of materials such as tantalum which resist the high temperature and reactivity of molten aluminum.

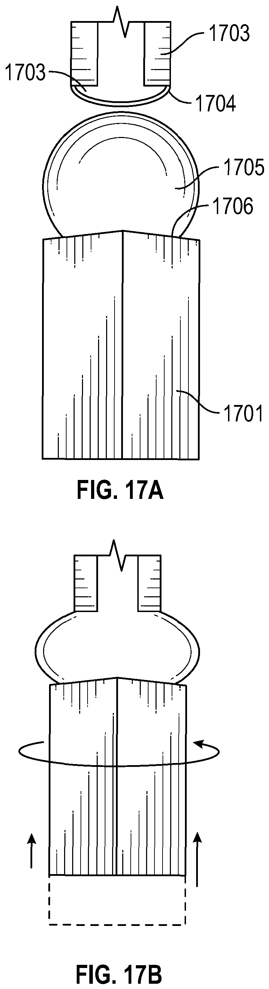

In another embodiment, a ceramic rod sized similar to or slightly larger than the nozzle hole is gently pressed against the nozzle face and rotated (See Figure 17A-B). The diameter of the rod is chosen to be large enough to effectively remove the dross from the desired area, without being any larger, since diameter increase will increase heat conduction through the rod. In one embodiment, the rod is approximately two to three times that of the nozzle orifice. In another embodiment, the nozzle has a raised stem with an orifice through it, and the rod diameter is chosen to be 50% larger than outer diameter of the stem as illustrated in the figure.

The ceramic may be chosen from a wide array of materials including alumina, mullite, silicon nitride, aluminum nitride, zirconia and silicon carbide. It is preferable that the thermal conductivity of the ceramic be relatively low so that, when contacting the liquid metal in the nozzle, the body of the rod does not remove excessive heat from the nozzle and the tip of the ceramic rod comes up to temperature rapidly. The rod is kept to a small diameter so as to further minimize the heat removed from the nozzle. As the rod is initially much colder than the heated nozzle, any liquid material on the nozzle face immediately freezes. However, since the rod is now in intimate contact with the hot nozzle, and has low thermal conduction along its length, the rod's end temperature rises. After a short time the material trapped between rod and nozzle re-melts and extrudes radially from the gap between the rod and nozzle face, where it either falls off or is easily removed by methods such as a brief blast of high-pressure gas or mechanical wiping.

In one alternative embodiment, the ceramic rod is preheated to a temperature at or near the liquidus of the metal being jetted. This eliminates the freeze/thaw step described above, and allows cleaning to occur more quickly. The process of radial extrusion from the gap remains the same as described in the previous paragraph.

In another embodiment, the rod is domed or pointed, this shape assists in the urging outward of dross away from the center of the nozzle and wiping the exit of the nozzle orifice as the rod turns. An additional benefit is that the dome or point self-centers on the nozzle bore, reducing the precision required to place the cleaning rod.

In another embodiment, the gentle force described above is applied by spring-loading the rod or its mounting, and moving the nozzle down onto the rod a known amount after contact is made, producing a known force. In yet another embodiment, a constant-force spring or mechanism is used, producing a known force regardless of movement after contact. Alternatively, the mounting of the rod is designed with inherent compliance, which behaves as a spring. In still another embodiment, an air cylinder is used to apply force in proportion to the gas pressure applied to the port of the cylinder.

Additional techniques can be used to modify or maintain the wetting. Relatively heavy force applied to the spinning rod tends to dewet the nozzle, while lighter force and/or the addition of additional molten metal to the tip of the rod tends to wet the nozzle face. In the case of a larger amount of material, a short burst of high-pressure gas alone can dislodge the material.

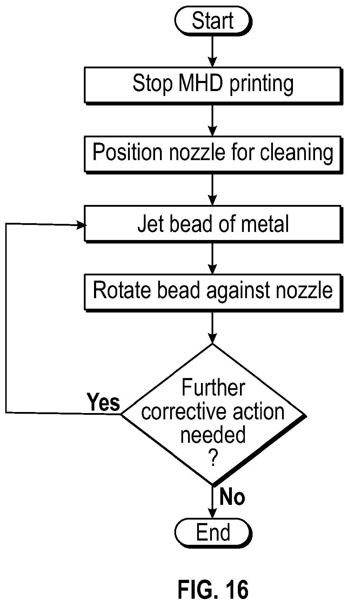

Fig. 16 depicts a flow chart for an embodiment cleaning technique as performed during a jetting process. To start, ongoing jetting is suspended, and the nozzle is placed over a ceramic rod above a discard tray. A bead of metal is jetted onto a top surface of the ceramic rodi 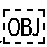 . The ceramic rod is rotated and the bead pressed against the nozzle face. The rotating bead of metal is at least partially liquid and in contact with the meniscus of liquid metal and dross is picked up. This process may be accomplished with the rod close to the nozzle, for example within the order of hundreds of microns, but without contact, which prevents wear on the nozzle. Additional liquid metal may continue to be jetted onto the existing bead, which will eventually increase in size until it is ejected off the top surface of the ceramic rod. Alternatively, the bead may be physically knocked off of the ceramic rod. Jetting may be continued to maintain wetting of the nozzle. In certain embodiments, the jetting and/or meniscus conditions of the nozzle may be evaluated to determine if additional cleaning or conditioning is required. If so, such maintenance can be conducted or otherwise the nozzle can be returned to operation.

Fig. 17A-B depict the cleaning process of Fig. 16. In Fig. 17A, ceramic rod 1701 is moved in vicinity of nozzle 1702, having a meniscus 1703 with an amount of dross 1704. A bead of metal 1705 is jetted onto a top surface 1706 of the ceramic rod 1701. In Fig. 17B, the ceramic rod presses the bead of metal 1705 against the nozzle 1702.

If it is desired to de-wet a nozzle, a large bead of metal may be collected on the tip of the nozzle and allowed to freeze the meniscus to the ceramic rod. The rod may then be withdrawn or a fast-moving object may be used to knock the bead off of the nozzle. In certain embodiments, the ceramic rod may freeze the meniscus to it when it comes in contact with the meniscus, which may de-wet the nozzle. Heating of the ceramic rod or the environment may be employed to prevent this or the solidification of a bead being used to clean the nozzle.

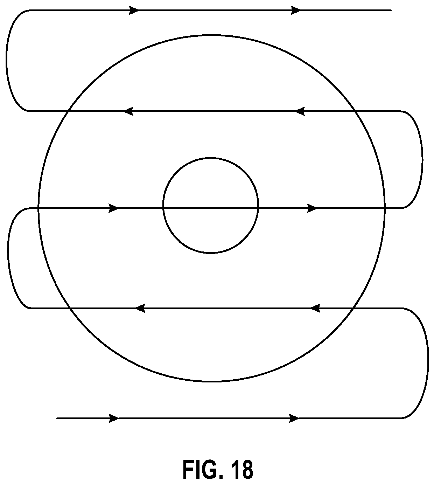

In certain embodiments, when a bead of metal on a ceramic rod is being employed to clean the stem of the nozzle, the ceramic rod may be moved laterally relative to the stem face in a predetermined pattern. Figure 18 depicts a top plan view of a particular pattern that may be employed, in which the ceramic rod is oscillated back and forth in a first direction while being moved laterally in a second direction. Alternatively, other patterns such as spiral may be employed.

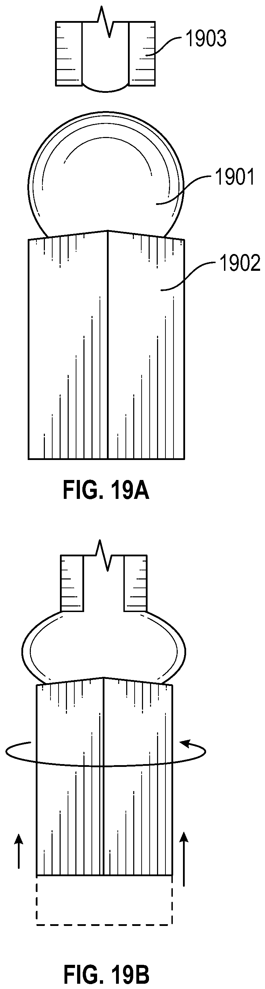

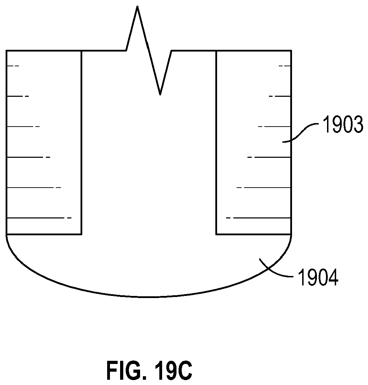

Now with reference to Fig. 19, in instances where a nozzle is dewetted, for instance before beginning a print or when a wetted meniscus has been disrupted by cleaning or otherwise, the nozzle stem may be rewetted. In one embodiment, a ball of material 1901 approximately 3-5 nozzle diameters in size is jetted onto the rotating tip of rod 1902 and then the tip is slowly moved up onto the hot nozzle 1903, flattening the drop onto the nozzle, leaving a wetting meniscus 1904.

Although the disclosed subject matter has been described and illustrated with respect to embodiments thereof, it should be understood by those skilled in the art that features of the disclosed embodiments can be combined, rearranged, etc., to produce additional embodiments within the scope of the invention, and that various other changes, omissions, and additions may be made therein and thereto, without parting from the spirit and scope of the present invention.

## Claims

1. A method of characterizing and adjusting deposition of droplets of liquid metal during additive manufacture of metal parts using ejection of liquid metal, comprising:
directing a strobed light source to a stream of droplets of liquid metal expelled from a discharge orifice of a nozzle by a magnetohydrodynamic force;
capturing by at least one camera directed at the stream of droplets a plurality of images of light from the strobed light source reflected from an individual droplet as it traverses a field of view of the camera; and
determining from the plurality of images a measured value of at least one physical characteristic of the individual droplet;
comparing the measured value to a desired value of the physical characteristic to determine that the difference between the desired value and the measured value exceeds a predetermined threshold;
based on the determination that the predetermined threshold is exceeded, adjusting a commanded position of a substrate during a printing operation to compensate for changes in at least one of droplet speed angle and trajectory, causing droplets of liquid metal expelled during the printing operation to land closer to a desired location on the substrate than without said compensation, wherein the adjustment is made by a controller configured to modify the substrate position based on feedback from the captured images.

2. The method of claim 1 further comprising the step of, when the difference the measured value and the desired value exceeds the predetermined threshold, cleaning the discharge orifice of the nozzle with a cleaning instrument.

3. The method of claim 1 further comprising the step of, when the difference between the measured value and the desired value exceeds the predetermined threshold, adjusting at least one printing parameter during the printing operation, wherein the at least one printing parameter includes the ejection velocity of the droplets, and wherein the adjustment is made by a controller configured to modify the printing parameters based on feedback from the captured images to maintain droplet characteristics within specified tolerances.

4. The method of claim 3 wherein the printing parameter is an amount of current passed through the liquid metal in the nozzle through a plurality of electrodes.

5. The method of claim 1 wherein the at least one physical characteristic includes at least one of a size of the individual droplet, a speed of the individual droplet and an angle of the individual droplet relative to an intended angle of ejection, and the presence of satellite droplets, wherein the controller is further configured to adjust the printing parameters to correct for deviations in the angle of ejection and to minimize the formation of satellite droplets based on the real-time analysis of the captured images.

6. The method of claim 1 further comprising the step of, for a plurality of individual drops, determining at least one of an exponentially-weighted moving average speed, a standard deviation of speed, an average change in drop-to-drop speed, a difference between highest and lowest speed, and an average angle.

7. The method of claim 1 wherein the at least one camera is two cameras wherein a first camera has a field of view perpendicular to a field of view of a second camera.

8. A system for characterizing droplets of liquid metal during additive manufacture of metal parts using jetting of liquid metal, comprising:
a strobed light source configured to illuminate a stream of droplets of liquid metal expelled from a discharge orifice of a nozzle;
at least one camera configured to capture a plurality of images of light from the strobed light source reflected off an individual droplet as it traverses a field of view of the camera;
a controller configured to determine from the plurality of images a measured value of least one physical characteristic of the individual droplet; and
a controller configured to compare the measured value to a desired value of the physical characteristic, determine that the measured value exceeds the desired value by a predetermined threshold, and in response to the determination adjust a commanded position of a substrate in real- time during a printing operation to compensate for changes in droplet speed and trajectory, causing droplets of liquid metal expelled during the printing operation to land closer to a desired location on the substrate than without said compensation.

9. The system of claim 8 wherein the controller is configured to, when the difference between the measured value and the desired value exceeds the predetermined threshold, cause the discharge orifice of the nozzle to be cleaned.

10. The system of claim 8 wherein the controller is configured to, when the difference between the measured value and the desired value exceeds the predetermined threshold, adjust at least one printing parameter.

11. The system of claim 10 wherein the printing parameter is an amount of current passed through the liquid metal in the nozzle by a plurality of electrodes.

12. The system of claim 8 wherein the physical characteristic is one of a size of the individual droplet, a speed of the individual droplet and an angle of the individual droplet.

13. The system of claim 8 wherein the controller is configured to, for a plurality of individual drops, determine at least one of an exponentially-weighted moving average speed, a standard deviation of speed, an average change in drop-to-drop speed, a difference between highest and lowest speed, and an average angle.

14. The system of claim 8 wherein the at least one camera is two cameras wherein a first camera has a field of view at a right angle from a field of view of a second camera.
